# EUROPEAN PATENT APPLICATION

(11) **EP 4 418 520 A1**
(43) Date of publication of application: **21.08.2024**
(21) Application number: 23156576.3
(22) Date of filing: 14.02.2023
(51) Int. Cl.: H02M 7/06

(54) **POWER CONVERSION SYSTEM**

(71) Applicant: ABB SCHWEIZ AG, 5400 Baden (CH)
(72) Inventor: ABDELHAKIM, Ahmed, Västerås (SE); CANALES, Francisco, Baden-Dättwil (CH)
(74) Representative: Kransell & Wennborg KB

(57) **Abstract**

A power conversion system (1) for powering an electrolyser, comprising K primary rectifier bridges (3), J auxiliary rectifier bridges (9), and Z DC/DC converters (15), each connected to an auxiliary rectifier bridge (9), wherein a first DC link (7) shared by the K primary rectifier bridges (3) is series connected with Z second DC links (10) of the Z DC/DC converters (15), thus forming an output of the power conversion system (1). Further, the power conversion system (1) comprises a transformer (19) with secondary windings connected to the K primary rectifiers (3) and the J auxiliary rectifiers (9) in various configurations.

## Description

### TECHNICAL FIELD

The present disclosure generally relates to power conversion systems, especially for powering electrolysers.

### BACKGROUND

Hydrogen economy has become an increasingly popular topic. There is a consensus that green hydrogen production is the only way to enable such economy to prosper. Today, approximately 95% of the hydrogen production is classified as grey, meaning it comes directly from fossil fuel origin and it is a carbon dioxide (CO₂) intensive activity. Blue hydrogen is the addition of carbon storage to the current way of production, substantially reducing the CO₂ footprint. However, green hydrogen produced by electrolysis with energy from renewable sources is the only way to produce hydrogen sustainably.

In order to meet the demand for hydrogen, large-scale electrolyser plants are planned for deployment in the near future. Electrolysers use low voltage direct current (DC) to circulate current through the water and break hydrogen and oxygen molecules apart from the water. Therefore, a large-scale electrolyser plant consumes high currents at low voltage. The most common way of producing this DC voltage is the use of a controlled thyristor rectifier. Such a solution requires both reactive and current harmonic compensation. These current harmonics can be reduced using multi-pulse configurations, while the reactive power still requires additional compensation due to considered firing angles across the whole lifetime. Moreover, the required magnetics on the electrolyser side are seen to be quite bulky in order to limit the peak-to-peak current ripple in the electrolyser and limit the degradation of its lifetime along with enhancing its hydrogen production capabilities.

CN114499216 A discloses a power supply system for powering electrolytic cells. Power converters are connected to respective sets of secondary windings of a transformer, in Y and Delta connection. One of the power converters is a single stage AC/DC converter which has outputs connected to the electrolyser, while the other power converter comprises two cascaded power converters, used for precision-adjusting the voltage to the electrolyser within a narrow range.

### SUMMARY

In view of the above, a general object of the present disclosure is to provide a power conversion system which solves or at least mitigates problems of the prior art.

There is hence according to a first aspect of the present disclosure provided a power conversion system for powering an electrolyser, comprising: K primary rectifier bridge or bridges, where K is an integer equal to or greater than 1, wherein if K is greater than 1 the K primary rectifier bridges are parallel connected at their DC side, a first DC link, with a DC link capacitor, common to the K primary rectifier bridges, J auxiliary rectifier bridge or bridges where J is an integer equal to or greater than 1, Z DC/DC converter or converters, Z being an integer equal to or greater than 1, wherein each auxiliary rectifier bridge has its output terminals connected to input terminals of one of the Z DC/DC converters, wherein each DC/DC converter has a second DC link in series connection with the first DC link, the first DC link and the Z second DC links defining an output of the power conversion system, and a transformer comprising N groups of M-phase secondary windings, wherein: A) if K=1, J=Z=1 or 2, and N=1, each auxiliary rectifier bridge is connected to a respective one of the DC/DC converters, and the M phases of the secondary winding are connected to input terminals of the primary rectifier bridge, and additionally to input terminals of the J auxiliary rectifier bridges, and wherein each auxiliary rectifier bridge comprises six semiconductor switches for rectification, B) if K=1, J=Z=2, and N=3, each auxiliary rectifier bridge is connected to a respective one of the DC/DC converters, and M phases of a first of the three M-phase secondary windings are connected to input terminals of the primary rectifier bridge, and the M phases of the second and third M-phase secondary windings are connected to input terminals of respective auxiliary rectifier bridges, C) if K is greater than 1, N=K+J, and Z=1, the M phases of each of K groups of M-phase secondary windings of a first winding set are connected to input terminals of a respective primary rectifier bridge, and the M phases of each of J group or groups of M-phase secondary windings of a second winding set, disjoint from the first winding set, are connected to input terminals of a respective auxiliary rectifier bridge, wherein if J is greater than 1, the J auxiliary rectifier bridges are parallel connected at their DC side, and D) if both K and Z are greater than 1, J is greater than Z, and N=K+J, each of Z-1 auxiliary rectifier bridges is connected to a respective one of Z-1 DC/DC converters, and the remaining auxiliary rectifier bridges are parallel connected at their DC side, and wherein the M phases of each of K groups of M-phase secondary windings of a first winding set are connected to input terminals of a respective primary rectifier bridge, and the M phases of each of J groups of M-phase secondary windings of a second winding set, disjoint from the first winding set, are connected to input terminals of a respective auxiliary rectifier bridge.

The majority of the power is passed through the K primary rectifier bridges. The majority of power may for example be in a range of 60-80% of the total power fed to the electrolyser. The remaining power is passed through the J auxiliary rectifier bridges and the Z DC/DC converters. The Z DC/DC converters are configured to regulate the voltage and current to the electrolyser.

Compared to conventional solutions, which have rectifier bridges that share the power equally, higher conversion efficiency may be achieved.

In the alternatives B-D, the performance on the grid side will be enhanced because there will be less harmonics injected into the grid, due to the configuration of the plurality of secondary side transformer legs, and their connections with the K primary rectifier bridge(s) and the J auxiliary rectifier bridge(s).

According to the alternatives A and B, when J and Z are equal to 2, a symmetrical voltage regulation of the electrolyser may be obtained.

According to one embodiment the semiconductor switches are transistors. The transistors may for example be metal oxide field effect transistors (MOS-FET) or insulated gate bipolar transistors (IGBT). The MOS-FETs or IGBTs may for example be silicone-based, silicone-carbide-based, or gallium-nitride-based.

According to one embodiment the power conversion system comprises a control system configured to control the semiconductor switches to perform rectification. The semiconductor switches may be controlled by pulse width modulation (PWM) to perform rectification.

According to one embodiment, the control system is configured to control the semiconductor switches to provide reactive power compensation.

According to one embodiment the control system is configured to control the semiconductor switches to provide harmonic compensation.

In alternative A, the same secondary windings are connected to both the primary rectifier bridge and to the J auxiliary rectifier bridge(s). By harmonic compensation and/or reactive power compensation performed by the six semiconductor switches of the J auxiliary rectifier bridge(s), the losses in the transformer can be reduced in relation to the design disclosed in CN114499216 A because the waveforms at the secondary side of the transformer are cleaner/more sinusoidal.

The power conversion system may be configured to delivery power in the megawatt range.

According to one embodiment the power conversion system is a low voltage power conversion system. With low voltage is herein meant a voltage at most 1.5 kV, such as at most 1 kV.

According to one embodiment each primary rectifier bridge comprises six semiconductor devices for rectification.

If K=1 and J=1, the power conversion system may be operated as a quasi-12 pulse rectifier. The term "quasi" is used because the majority of power is passed through the primary rectifier bridge, which may have six semiconductor devices, while six semiconductor switches may be used for rectification by the auxiliary rectifier bridge.

If K=2 and J=1 the power conversion system may be operated as a quasi-18 pulse rectifier. If K=3 and J=1, the power conversion system may be operated as a quasi-24 pulse rectifier.

According to one embodiment, the six semiconductor devices are diodes, thyristors, or transistors such as MOS-FETs or IGBTs.

According to one embodiment each primary rectifier bridge comprises six semiconductor devices for rectification.

According to one embodiment the six semiconductor devices are diodes, thyristors, or transistors.

According to one embodiment in case of alternative A, output terminals of each DC/DC converter are galvanically isolated from the auxiliary rectifier bridge to which the DC/DC converter is connected. Short circuiting of the primary rectifier bridge and the J auxiliary rectifier bridges through the DC/DC converter may thus be avoided.

According to one embodiment in case of alternative A, the power conversion system comprises a filter, wherein the filter is connected between input terminals of the auxiliary rectifier bridge and the transformer.

The filter, together with the J auxiliary rectifier bridges, and Z second DC links of the Z DC/DC converters, may form an active filter.

The active filter may be configured to inject current harmonics into the grid, opposite to the current harmonics in the primary rectifier bridge. The active filter may be controlled based on current measurements of currents of the primary rectifier bridge.

According to one embodiment M=3.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1. schematically shows a circuit diagram of an example of a power conversion system for powering an electrolyser;
Fig. 2 schematically shows a circuit diagram of another example of a power conversion system for powering an electrolyser; and
Fig. 3 schematically shows a circuit diagram of a general example of a power conversion system for powering an electrolyser.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

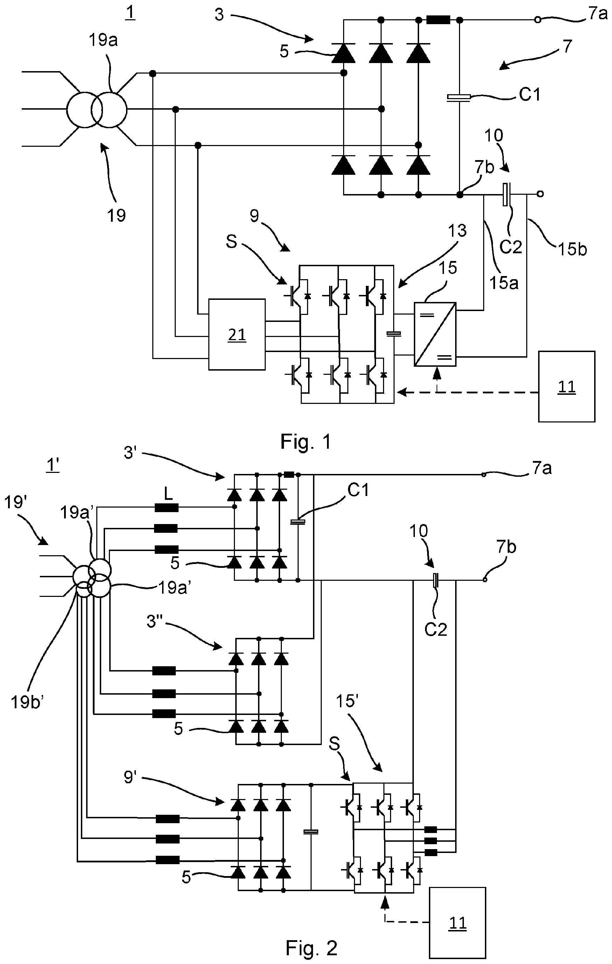

Fig. 1 shows an example of a power conversion system 1 for powering an electrolyser.

The power conversion system 1 comprises a single primary rectifier bridge 3. The primary rectifier bridge 3 comprises a plurality of semiconductor devices 5 for rectification. In the present example, the number of semiconductor devices 5 is six. Each leg of the primary rectifier bridge 3 comprises two semiconductor devices 5.

According to the example, the semiconductor devices 5 are diodes. Alternatively, the semiconductor devices 5 could be thyristors or transistors.

The primary rectifier bridge 3 comprises a first DC link 7. The DC first link 7 is arranged on the DC side of the primary rectifier bridge 3. The first DC link 7 comprises a DC link capacitor C1. The first DC link 7 has a first output terminal 7a and a second output terminal 7b. The first output terminal 7a is a first power conversion system output terminal, i.e., a first output terminal of the power conversion system 1. The first power conversion system output terminal may be a positive voltage terminal of the power conversion system 1.

The power conversion system 1 comprises an auxiliary rectifier bridge 9. The auxiliary rectifier bridge 9 is an active rectifier bridge. The auxiliary rectifier bridge 9 comprises six semiconductor switches S. The semiconductor switches S are arranged to provide rectification. The semiconductor switches S may for example be thyristors, or transistors.

The power conversion system 1 may comprise a control system 11 configured to control the semiconductor switches S. The control system 11 is configured to control the switching of the semiconductor switches S such that the auxiliary rectifier bridge 9 performs rectification. For example, if the semiconductor switches S are transistors, the control system 11 may be configured to control the switching of the transistors by means of a PWM modulated signal provided to the gates of the transistors.

The control system 11 may be configured to, in addition to controlling the semiconductor switches S to perform rectification, also control the semiconductor switches S to perform one or both of harmonic compensation and reactive power compensation. It would be apparent to the skilled person how to implement such control, and details thereof will not be described any further herein.

The auxiliary rectifier bridge 9 comprises a third output terminal and a fourth output terminal. A second DC link 13 is formed across the third output terminal and the fourth output terminal.

The power conversion system 1 comprises a DC/DC converter 15 having input terminals connected to the third output terminal and the fourth output terminal, respectively. The DC/DC converter 15 is thus connected to the second DC link 13.

The control system 11 is configured to control the DC/DC converter 15.

The DC/DC converter 15 has output terminals 15a and 15b which are galvanically isolated from the auxiliary rectifier bridge 9. The DC/DC converter 15 may comprise a DC/AC converter stage, an AC/DC converter stage, and a transformer connected between the DC/AC converter stage and the AC/DC converter stage to provide the galvanic isolation.

The DC/DC converter 15 has a second DC link capacitor C2 connected across its output terminals 15a and 15b forming a second DC link 10. The first DC link 7 and the second DC link 10 are series connected and the output of the power conversion system 1 is defined by the two DC links 7 and 10, i.e., an electrolyser that is to be powered by the power conversion system 1 is connected across the two DC links 7 and 10. The output terminal 15a is connected the second output terminal 7b of the DC link 7. The other output terminal 15b forms a second power conversion system output terminal, i.e., a second output terminal of the power conversion system 1. The negative side of the DC link capacitor C1 is connected to the positive side of the second DC link capacitor C2. The negative side of the second DC link capacitor C2 is connected to the second power conversion system output terminal. The second power conversion system output terminal may be the negative voltage terminal of the power conversion system 1. An electrolyser can be connected to the first and the second power conversion system output terminals for powering the electrolyser. The electrolyser is thus powered by the power conversion system 1 with a majority of the power passing through the primary rectifier bridge 3 and a minority of the power flowing through the auxiliary rectifier bridge 9 and the DC/DC converter 15.

The power conversion system 1 further comprises a transformer 19. The transformer 19 has a primary side configured to be connected to a grid such as a medium voltage grid. The transformer 19 has a secondary side configured to be connected to the primary rectifier bridge 3 and, at least indirectly, to the auxiliary rectifier bridge 9. Hereto, the power conversion system 1 may optionally comprise a filter 21 connected between the transformer 19 and the inputs of the auxiliary rectifier bridge 9. The filter 21 may be a passive filter. The filter 21 together with the auxiliary rectifier bridge 9 and the second DC link 13 becomes an active filter when the control system 11 controls the semiconductor switches S in a suitable manner. Thus, depending on the control of the semiconductor switches S, the active filter may inject current harmonics into the grid, opposite to current harmonics generated by the primary rectifier bridge 3.

The transformer 19 comprises one group of M-phase secondary windings 19a. The M-phase secondary windings 19a are secondary side windings of the transformer 19. According to the example, M=3, and thus the transformer 19 comprises a single group of three secondary windings. Each of the secondary windings is connected to a respective input terminal of the primary rectifier bridge 3. Additionally, each secondary winding 19a is connected to a respective input terminal of the auxiliary rectifier bridge 9, either directly, or in case the filter 21 is present, via the filter 21.

Fig. 2 shows another example of a power conversion system for powering an electrolyser.

According to the example in Fig. 2, the power conversion system 1' comprises two primary rectifier bridges 3', and 3". The first primary rectifier bridge 3' is identical to the primary rectifier bridge 3 described above.

The second primary rectifier bridge 3" is identical to the first primary rectifier bridge 3'. The first and the second primary rectifier bridges 3' share the first DC link 7.

The power conversion system 1' also comprises an auxiliary rectifier bridge 9', and a DC/DC converter 15' connected to the output terminals of the auxiliary rectifier bridge 9'. Like in the first example, one of the output terminals of the DC/DC converter 15' is connected to the second output terminal 7b and the other output terminal forms the second power conversion system output terminal.

The DC/DC converter 15' may comprise a plurality of semiconductor switches S, such as thyristors or transistors, for DC/DC conversion. In case the semiconductor switches are transistors, they may for example be MOS-FETs or IGBTs that are silicone-based, silicone-carbide-based, or gallium-nitride-based.

Each of the two primary rectifier bridges 3', 3", and the auxiliary rectifier bridge 9' comprises a plurality of semiconductor devices 5. The semiconductor devices 5 may be diodes, as shown in Fig. 2, or they may be semiconductor switches such as thyristors or transistors. In case the semiconductor switches are transistors, they may for example be MOS-FETs or IGBTs that are silicone-based, silicone-carbide-based, or gallium-nitride-based.

The power conversion system 1' comprises a transformer 19'. The transformer 19' has a primary side configured to be connected to a grid such as a medium voltage grid. The transformer 19' has a secondary side configured to be connected to the primary rectifier bridges 3', 3", and to the auxiliary rectifier bridge 9'.

The transformer 19' comprises a first winding set comprising K group(s) of M-phase secondary windings 19a', with K according to the example being 2, and a second winding set comprising J group(s) of M secondary windings 19b', where J is an integer equal to 1 in the present example. Each group thus comprises M secondary windings, one for each phase. The first winding set and the second winding set consist of secondary side windings of the transformer 19'. According to the example, M=3. The three phases of each of the two groups of secondary windings 19a' in the first winding set are connected to respective input terminals of the primary rectifier bridges 3', 3", and the three phases of the group of secondary windings 19b' in the second winding set are connected to the input terminals of the auxiliary rectifier bridge 9'. Typically, the transformer 19' may have three legs, one for each phase, each being provided with three secondary windings. One group of M-phase secondary windings connected to one of the primary rectifier bridges 3', 3" may be connected in Delta, and the other group connected to the other primary rectifier bridges 3', 3" may be Wye-connected. The 5^{th}, 7^{th}, and 11^{th} harmonic may thereby be cancelled.

If the auxiliary rectifier bridge has semiconductor switches, the control system may control the semiconductor switches to provide harmonic compensation of higher harmonics, e.g., the 13^{th}, 17^{th}, and so on.

The control system 11 may be configured to control the DC/DC converter 15' with interleaved operation. This reduces the ripple to the electrolyser.

According to one variation of the example shown in Fig. 2, the power conversion system could additionally comprise a third primary rectifier bridge. The transformer would in this case have four groups of secondary windings 19a' and 19b', three of them connected to the input terminals of a respective one of the primary rectifiers and the fourth connected to the input terminals of the auxiliary rectifier ridge. The power conversion system could then be operated as a quasi-24 pulse rectifier.

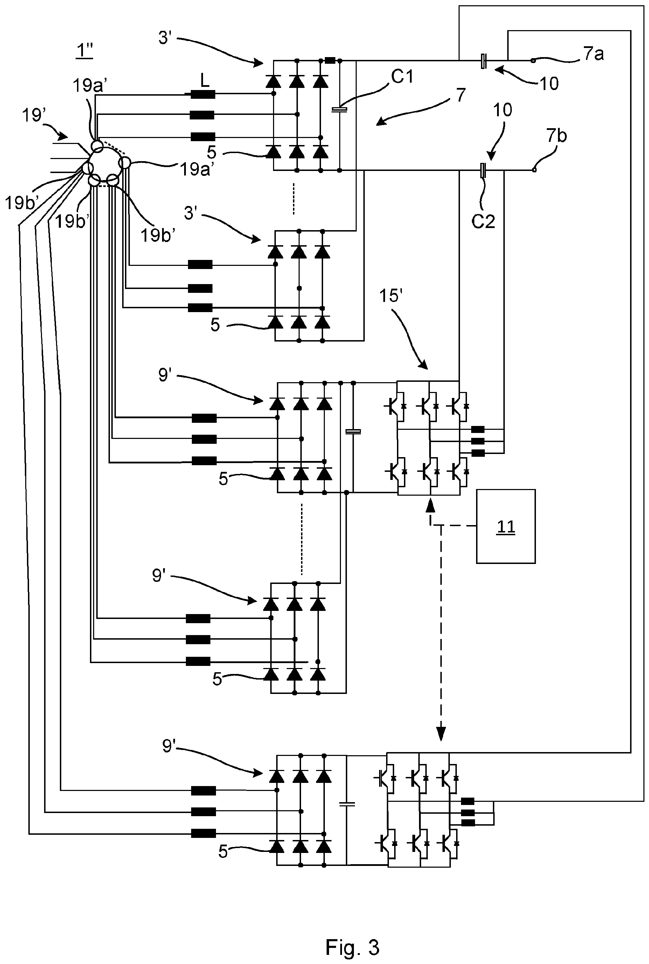

More generally, with reference to Fig. 3, the power conversion system 1" may comprise K primary rectifier bridges 3' with K being an integer equal to or greater than 1 and J auxiliary rectifier bridges 9', J being an integer equal to or greater than 1.

Further, the power conversion system 1" comprises Z DC/DC converters 15', where Z is an integer equal to or greater than 1, and at most equal to J. Z may be smaller than J. In the example in Fig. 3 Z=2.

In the general case, shown in Fig 3, the transformer 19' has two winding sets of M-phase secondary windings 19a' and 19'b. The number of group(s) of M-phase secondary windings 19a' in the first winding set is equal to K and the number of group(s) of M-phase secondary windings 19b' in the second winding set is equal to J. The primary bridge rectifiers 3' are parallel connected on their DC side and thus share the common first DC link 7. All auxiliary rectifier bridges 9' that are connected to the same DC/DC converter 15' are parallel connected on their DC side. In case Z is greater than 1, then Z auxiliary rectifier bridges 9' may be connected to respective ones of the Z DC/DC converters 15'. If J is greater than Z, J-Z auxiliary rectifier bridges 9' may be connected to the same DC/DC converter 15'. The second DC links 10 of the Z DC/DC converters 15' are series connected with the first DC link 7. The outputs of the power conversion system 1" are formed across the DC links 7 and 10.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A power conversion system (1; 1'; 1") for powering an electrolyser, comprising:
K primary rectifier bridge or bridges (3; 3', 3"), where K is an integer equal to or greater than 1, wherein if K is greater than 1 the K primary rectifier bridges (3'; 3") are parallel connected at their DC side,
a first DC link (7), with a DC link capacitor (C1), common to the K primary rectifier bridges (3; 3', 3"),
J auxiliary rectifier bridge or bridges (9; 9') where J is an integer equal to or greater than 1,
Z DC/DC converter or converters (15; 15'), Z being an integer equal to or greater than 1, wherein each auxiliary rectifier bridge (9; 9') has its output terminals connected to input terminals of one of the Z DC/DC converters (15; 15'),
wherein each DC/DC converter (15; 15') has a second DC link (10) in series connection with the first DC link (7), the first DC link (7) and the Z second DC links (10) defining an output of the power conversion system (1; 1'), and
a transformer (19; 19') comprising N groups of M-phase secondary windings (19a; 19a'), wherein:
A) if K=1, J=Z=1 or 2, and N=1, each auxiliary rectifier bridge (9; 9') is connected to a respective one of the DC/DC converters (15; 15'), and the M phases of the secondary winding (19a) are connected to input terminals of the primary rectifier bridge (3), and additionally to input terminals of the J auxiliary rectifier bridges (9), and wherein each auxiliary rectifier bridge (9) comprises six semiconductor switches (S) for rectification,
B) if K=1, J=Z=2, and N=3, each auxiliary rectifier bridge (9; 9') is connected to a respective one of the DC/DC converters (15; 15'), and M phases of a first of the three M-phase secondary windings (19a') are connected to input terminals of the primary rectifier bridge (3'; 3"), and the M phases of the second and third M-phase secondary windings (19a') are connected to input terminals of respective auxiliary rectifier bridges (9'),
C) if K is greater than 1, N=K+J, and Z=1, and the M phases of each of K groups of M-phase secondary windings (19a') of a first winding set are connected to input terminals of a respective primary rectifier bridge (3'; 3"), and the M phases of each of J group or groups of M-phase secondary windings (19b') of a second winding set, disjoint from the first winding set, are connected to input terminals of a respective auxiliary rectifier bridge (9'), wherein if J is greater than 1, the J auxiliary rectifier bridges (9; 9') are parallel connected at their DC side,
D) if both K and Z are greater than 1, J is greater than Z, and N=K+J, each of Z-1 auxiliary rectifier bridges (9; 9') is connected to a respective one of Z-1 DC/DC converters (15; 15'), and the remaining auxiliary rectifier bridges (9; 9') are parallel connected at their DC side, and wherein the M phases of each of K groups of M-phase secondary windings (19a') of a first winding set are connected to input terminals of a respective primary rectifier bridge (3'; 3"), and the M phases of each of J groups of M-phase secondary windings (19b') of a second winding set, disjoint from the first winding set, are connected to input terminals of a respective auxiliary rectifier bridge (9').

2. The power conversion system (1; 1'; 1") as claimed in claim 1, wherein the semiconductor switches (S) are transistors.

3. The power conversion system (1; 1") as claimed in claim 1 or 2, wherein the power conversion system (1) comprises a control system (11) configured to control the semiconductor switches (S) to perform rectification.

4. The power conversion system (1; 1") as claimed in claim 3, wherein the control system (11) is configured to control the semiconductor switches (S) to provide reactive power compensation.

5. The power conversion system (1; 1") as claimed in claim 3 or 4, wherein the control system (11) is configured to control the semiconductor switches (S) to provide harmonic compensation.

6. The power conversion system (1; 1'; 1") as claimed in any of the preceding claims, wherein each primary rectifier bridge (3; 3', 3") comprises six semiconductor devices (5) for rectification.

7. The power conversion system (1; 1'; 1") as claimed in claim 6, wherein the six semiconductor devices (5) are diodes, thyristors, or transistors.

8. The power conversion system (1) as claimed in any of the preceding claims, wherein in case of alternative A, output terminals (15a), (15b) of each DC/DC converter (15) are galvanically isolated from the auxiliary rectifier bridge (9) to which the DC/DC converter (15) is connected.

9. The power conversion system (1) as claimed in any of the preceding claims, wherein in case of alternative A, the power conversion system comprises a filter (21), wherein the filter (21) is connected between input terminals of the auxiliary rectifier bridge (9) and the transformer (19).

10. The power conversion system (1; 1'; 1") as claimed in any of the preceding claims, wherein M=3.
